Europäisches Patentamt

European Patent Office

Office européen des brevets

(11) Veröffentlichungsnummer: **0 153 993**

**A1**

(12) # EUROPÄISCHE PATENTANMELDUNG

(21) Anmeldenummer: 84112791.3

(22) Anmeldetag: 24.10.84

(51) Int. Cl.⁴: **B 23 B 5/16**

(30) Priorität: 18.02.84 DE 3405890

(43) Veröffentlichungstag der Anmeldung:
11.09.85 Patentblatt 85/37

(84) Benannte Vertragsstaaten:
AT DE FR GB IT

(71) Anmelder: Th. Kieserling & Albrecht GmbH & Co.
Birkenweiher 66
D-5650 Solingen 1(DE)

(72) Erfinder: Falkenau, Erhard
Goethestrasse 1
D-4018 Langenfeld(DE)

(72) Erfinder: Tückmantel, Eberhardt
Rembrandweg 14
D-4010 Hilden(DE)

(54) Endenbearbeitungsmaschine für Stangen und Rohre.

㊿ Gezeigt ist eine Endenbearbeitungsmaschine (1) für Stangen (8) und Rohre, bei der das Werkstück feststeht und ein rotierender Messerkopf (2) zur Bearbeitung auf das Werkstück zu vorgeschoben wird. Der Vorschub ist aufgeteilt in einen Leerhub (9) mit hoher Geschwindigkeit und einen Arbeitshub (10) mit einstellbarer reduzierter Vorschubgeschwindigkeit. Die Umschaltung von Leerhub (9) auf Arbeitshub (10) erfolgt durch einen Schalter (11), der zentrisch im Messerkopf (2) angeordnet ist und kurz vor dem Auftreffen der Messer (14, 15) auf das Werkstück auf die kleinere Vorschubgeschwindigkeit für den Arbeitshub (10) umschaltet. Bei der gezeichneten hydraulischen Lösung ist der Schalter (11) ein Steuerschieber, der in einem Kolben (5) zwischen zwei parallelen Rückflußleitungen (17, 18) umschaltet, die, durch unterschiedliche Querschnitte bedingt, die Veränderung der Vorschubgeschwindigkeit des Messerkopfes verursachen.

Durch die automatische Anpassung des Leerhubes (9) an die in einem gewissen Bereich streuende axiale Positionierung der Stangen (8), wird ein gesonderter "Bündigfahrrollgang" überflüssig.

./...

Fig.1

---

- 1 -

Endenbearbeitungsmaschine für Stangen und Rohre.

Die Erfindung bezieht sich auf eine Endenbearbeitungsmaschine gem. dem Oberbegriff von Anspruch 1.

Die Erfindung findet Anwendung bei der Adjustage von Stangen
und Rohren, wie z.B. bei Planfräsen, Fasen oder
Gewindeschneiden an den Enden der Stangen und Rohre.

Maschinen, die derartige Aufgaben erfüllen, arbeiten
vollautomatisch. Ein sich dabei stellendes Problem ist die
Positionierung des Werkstücks relativ zum Werkzeug. Um die
Taktzeiten kurz zu halten, erfolgt die Annäherung von
Werkzeug und Werkstück mit einer höheren Geschwindigkeit als
der Vorschub bei der Bearbeitung.

Es ist eine Endenbearbeitungsmaschine der
gattungsbildenden Art bekannt (DE-PS 1 200 645), bei der die
Stange bzw. das Rohr vor der Bearbeitung mit der zu
bearbeitenden Stirnfläche in eine vorgegebene axiale
Position gebracht wird. Der Messerkopf hat einen
kolbenförmigen rückwärtigen Ansatz, der in einem am
Maschinengehäuse befestigten Zylinder in Längsrichtung des
zu bearbeitenden Werkstücks beweglich geführt ist. Der
Zylinder rotiert im Maschinengehäuse. Der axiale
Verfahrweg des Messerkopfes schließt mit dem Arbeitshub ab.
Nachteilig bei dieser Lösung ist, daß die Stangen oder
Rohre zunächst auf einem sogenannten Bündigfahrrollgang in
die erwähnte, vorbestimmte axiale Position gebracht werden
müssen, damit das Fräsen der Stirnfläche, die Anbringung der
Fase oder das Aufschneiden des Gewindes zu der gewünschten
Form des Endes des Werkstücks führen. Bei fehlerhafter
axialer Positionierung des Werkstücks kann z.B. das Anfasen

./...

- 2 -

ganz unterbleiben oder zu einer zu breiten Fase führen.

Der Erfindung liegt von daher die Aufgabe zugrunde, das axiale Zusammenführen von Werkstück und Werkzeug von einer exakten Vorpositionierung des Werkstücks unabhängig zu machen.

Die Lösung dieser Aufgabe ist im Kennzeichen von Anspruch 1 wiedergegeben.

Durch die fehlende Vorpositionierung des Werkstücks muß der Messerkopf unterschiedliche Hübe ausführen. Dadurch bedingt, wird zur Verkürzung der Taktzeit eine Einteilung des Hubes des Messerkopfes in einen ersten Teil als Leerhub und in einen zweiten Teil als Arbeitshub vorgeschlagen.

Das Werkstück selbst dient mit seiner Stirnfläche dem Schalter als Anschlag. Beim Auftreffen des Schalters auf das Werkstück schaltet dieser vom Leerhub auf den Arbeitshub um. Die Verschiebbarkeit des Schlittens und die Schaltbewegung des Schalters sind gleichgerichtet. Die Umschaltung durch den Schalter erfolgt dadurch, daß dieser zwischen zwei parallelen Energieversorgungsleitungen umschaltet. Diese Umschaltung kann mechanisch, elektrisch oder hydraulisch bzw, pneumatisch erfolgen.  Die Länge des Leerhubes regelt sich automatisch dadurch, daß der Arbeitshub erst mit Auftreffen des Schalters auf die Werkstückstirnfläche eingeleitet wird. Die genaue Entfernung des zu bearbeitenden Endes von dem Messerkopf in der Ausgangsposition ist damit unerheblich geworden, ein "Bündigfahrrollgang" ist entbehrlich.

Nach der mit Anspruch 2 verfolgten, bevorzugten, hydraulischen Lösung ist eine Vereinfachung vorgesehen durch insbesondere die Variation der Vorschubgeschwindigkeiten zwischen Leerhub und Arbeitshub mit einem Minimum an Aufwand erfolgen kann.

- 3 -

Vorzugsweise ist eine Ausbildung der Erfindung gemäß Anspruch 3 vorgesehen, weil dann im Kolben selbst ein Druck aufrecht erhalten werden kann, der einen Minimalwert nicht unterschreitet.

Die mit Anspruch 4 verfolgte Ausführungsform betrifft eine Ausgestaltung des Steuerschiebers als Schieber in einem Wegeventil, das im Kolben ausgebildet ist. Auch dieses Merkmal zeichnet sich durch seine bauliche Beschränkung auf ein Minimum an Teilen und kurze Wege für das Druckmedium aus.

Die Ausgestaltung der Erfindung gemäß Anspruch 5 liegt ebenfalls auf der Linie der Minimierung des baulichen Aufwandes, da es auch einen Verzicht auf zusätzliche Schalt- oder Bauelemente bewirkt.

Die weitere Ausgestaltung der Erfindung gemäß Anspruch 6 berücksichtigt in besonderem Maße die unterschiedliche Länge des Leerhubes des Messerkopfes, die durch die Streuung der Lage der zu bearbeitenden Enden bedingt ist und besagt, daß die aus der Kolbenstange austretende Rückflußleitung weit genug an einem aus dem Zylinder herausragenden Ende der Kolbenstange angeordnet sein muß, damit in jeder Lage des Kolbens dieser Anschluß außerhalb des Zylinders angeordnet ist.

Das mit Anspruch 7 verfolgte Merkmal dient der Erzielung einer gleichmäßigen Vorschubgeschwindigkeit bei der Bearbeitung, unabhängig von dem Druck im Hydrauliksystem.

Die in Anspruch 8 gekennzeichnete Weiterbildung der Erfindung führt dazu, daß der Steuerschieber stets in der vordersten, ihm möglichen Stellung ist. Dies könnte alternativ auch mit einer oder mehreren Federn erreicht werden, jedoch ist mit der hier behandelten Gestaltung des Steuerschiebers dieses Ziel erreichbar, ohne daß ein

./...

Th. Kieserling & Albrecht, GmbH & Co.     Solingen, den 16.02.84

Patentanmeldung                                      Akte K 258

- 4 -

zusätzliches Bauelement vorgesehen werden muß. Eine rückwärtige, vorzugsweise ringförmige Stirnfläche des Steuerschiebers dient dazu, den Steuerschieber in die vorderste Position zu bringen, während die anderen Teile der rückwärtigen Stirnfläche der Steuerung des Druckmediums dienen oder, wie zu Anspruch 10 erläutert, eine Anschlagsfunktion haben.

Das mit Anspruch 9 verfolgte Merkmal stellt eine Trennung des Messerkopfes und seiner Lagerung einerseits und der Steuerung des Vorschubes desselben dar. Damit können in einfacher Weise Standardelemente aus den Bereichen Hydraulik, Pneumatik oder Elektrik eingesetzt werden, die die räumlichen Gegebenheiten der eigentlichen Maschine nicht in vollem Umfange berücksichtigen müssen.

Die mit Anspruch 10 verfolgte Weiterbildung der Erfindung beruht auf der Notwendigkeit, für unterschiedliche Werkstücke unterschiedliche Fashübe oder Gewindelängen etc. einstellen zu können. Während der Bearbeitung verschiebt sich der Steuerschieber relativ zum Kolben, da der Steuerschieber am Werkstück anliegt, das Werkstück also als Anschlag für den Steuerschieber dient, und der Kolben mit dem Messerkopf über das Werkstückende fährt. Diese Relativbewegung ist zwingend erforderlich für den Vorschub des Messerkopfes/Kolbens relativ zum Werkstück. Sie wird zur Begrenzung des Arbeitshubes ausgenutzt. Bei relativ zum Kolben festgesetztem Steuerschieber wird ein weiterer Vorschub des Messerkopfes verhindert.

Die Erfindung wird im einzelnen anhand der in der Zeichnung dargestellten, bevorzugten Lösung näher erläutert. Dabei zeigen:

./...

0153993

---

- 5 -

Fig. 1:    eine schematische Darstellung der
           Endenbearbeitungsmaschine mit dem Messerkopf,
           in der Phase des Leerhubes, mit zugehörigem
           Schaltplan

Fig. 2:    einen vergrößerten Ausschnitt aus Fig. 1, in
           dem die Ausbildung der hydraulischen
           Umsteuerung wiedergegeben ist,

Fig. 3     eine Darstellung wie Fig. 1 jedoch beim
           Arbeitshub


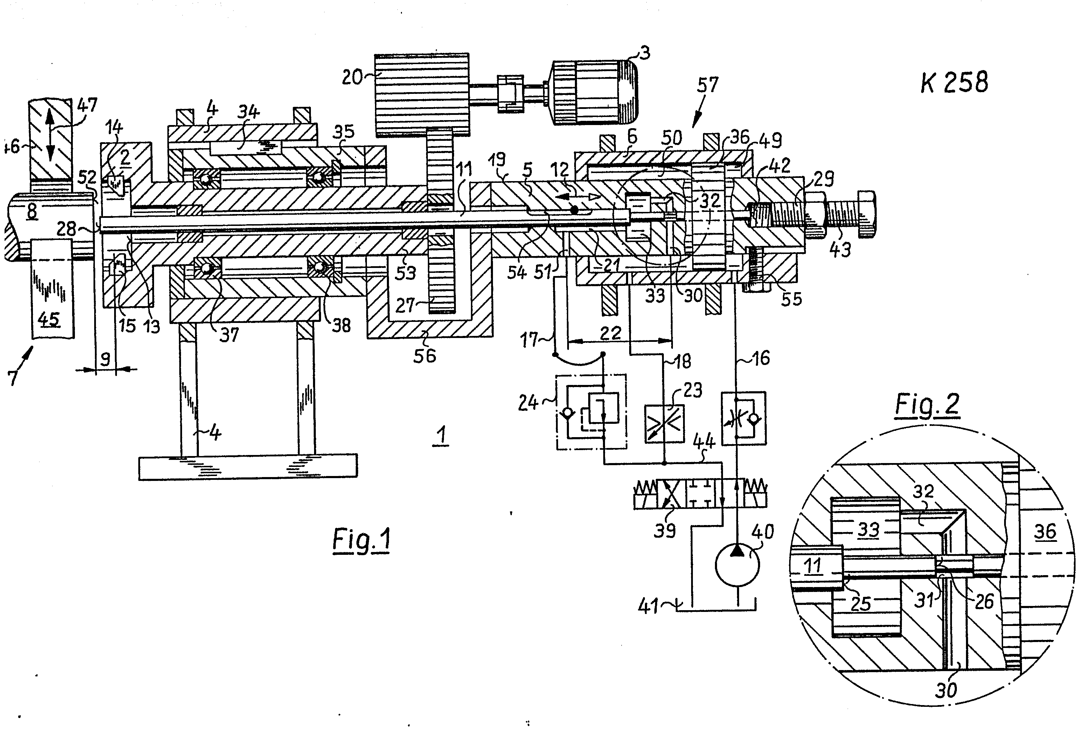

Die in Fig. 1 gezeigte Endenbearbeitungsmaschine 1 besteht aus einem Maschinengehäuse 4, einem darin verschieblichen Schlitten 35, einer darin in Lagern 37, 38 umlaufenden Welle 53, die in Richtung des Pfeiles 12 axial verschiebbar angeordnet ist. Der Schlitten 35 ist mit einem Kolben 5 verbunden. Die Verbindung wird durch einen U-förimgen Mitnehmer 56 hergestellt, der eine axiale Verbindung des Kolbens 5 mit dem Schlitten 35 gewährleistet. Der Kolben 5 weist einen Ringbund 36 auf, dessen ringförmige Stirnflächen die wirksamen Kolbenflächen darstellen und der den doppelt wirkenden Zylinder in die Ringräume 49, 50 einteilt. Der Kolben 5 und der Zylinder 6 sind Bestandteile einer angesetzten, austauschbaren Steuerbaugruppe 57.

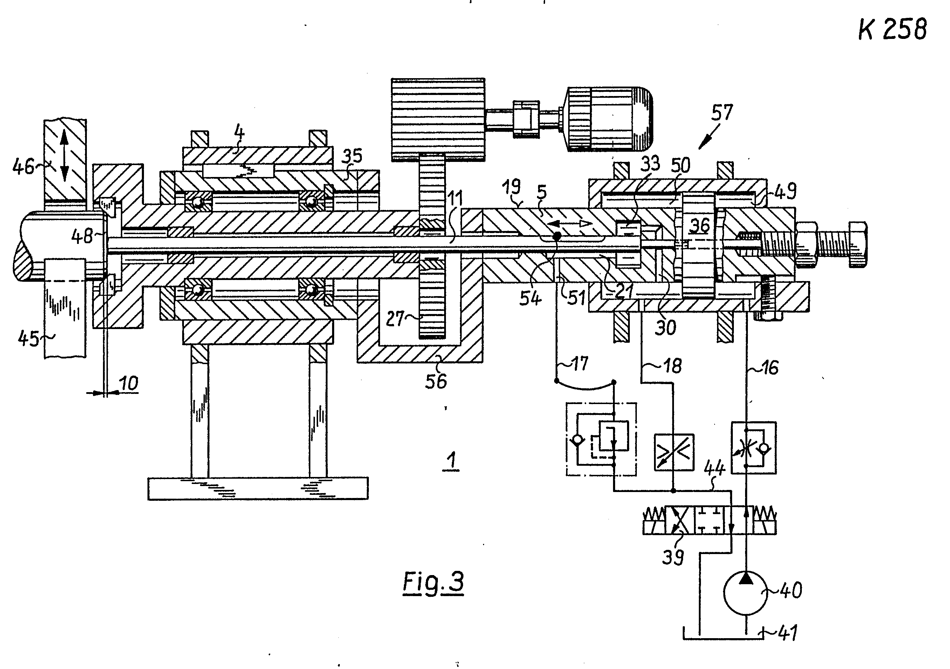

Stirnseitig ragt aus dem Schlitten 35 ein Messerkopf 2 heraus, der mit seinen Messern 14, 15 am Ende einer im Querschnitt runden Stange 8 eine Fase 48 anbringt (Fig.3). Der Messerkopf ist stirnseitig an einer im Schlitten 35 drehbar in Lagern 37, 38 aufgenommenen Welle 53 ausgebildet.

Das Werkstück wird zu diesem Zweck in der Spannvorrichtung 7 dreh- und ortsfest eingespannt. Die

./...

- 6 -

Spannvorrichtung besteht aus 2 Spannbacken 45, 46, von denen die Spannbacke 45 ortsfest ist und nur bei der Bearbeitung eines anderen Werkstückdurchmessers verstellt wird, während die zweite Spannbacke 46 bei jedem Spannvorgang gemäß Pfeil 47 verschoben wird.

Die Welle 53 wird durch einen Motor 3 über ein langes Antriebsritzel 20 und ein Treibrad 27 in Rotation versetzt. Beim Leerhub 9 und beim Arbeitshub 10 verschiebt sich das Treibrad 27 mitsamt der Welle 53 und dem Messerkopf 2 axial gegenüber dem Antriebsritzel 20. Die axiale Verschiebung des Kolbens 5 in dem Zylinder 6 erfolgt hydraulisch durch den von der Pumpe 40 aufgebrachten Druck. Um den an der Welle 53 ausgebildeten Messerkopf auf die Stange 8 vorzubewegen, wird Öl durch die Zuflußleitung 16 in den Ringraum 49 gedrückt. Der Kolben verschiebt dann den Messerkopf 2 auf die Stange 8 zu.

Mittig innerhalb des Messerkopfes ragt ein als Schalter 11 ausgebildeter Steuerschieber aus der Stirnseite 13 des Messerkopfes heraus. Der Steuerschieber ist im Kolben 5 und im Schlitten 35 axial in Richtung des Pfeiles 12 verschiebbar. Er dreht sich nicht mit der Welle 53 und dem Messerkopf. mit; er wird in seiner Drehlage von einer Sicherung 54 gegen Verdrehen im Kolben 5 gehalten. Der Steuerschieber hat im Bereich des Kolbens 5 zwei ringförmige, vom Messerkopf weg weisende Absätze 25, 26, wobei der Stirnflächenabsatz 26 durch einen Einstich 31 gebildet wird und der Absatz 25 durch eine generelle Verjüngung des Steuerschiebers. Auf der dem Messerkopf abgewandten Seite ist dem Steuerschieber (11) ein verstellbarer Anschlag 29 zugeordnet, der am Kolben (5) über eine Verstellung 43 befestigt ist.

Ausgehend von einem, bezogen auf den Ringbund 36, in Richtung auf den Messerkopf zu angeordneten Ringraum 50, ist im Kolben eine

.⁄...

0153993

---

- 7 -

Querbohrung 30 vorgesehen, die die Axialbohrung für den Steuerschieber in dem Bereich, in dem der Einschnitt 31 im Leerhub angeordnet ist, durchkreuzt. Sie führt weiter über eine im Kolben ein Stück axial verlaufende Bohrung 32 in einen, den Steuerschieber umfassenden Ringraum 33.

Die Bohrungen 30, 32 finden über den Ringraum 33 ihre Fortsetzung in einem in axialer Richtung weiterführenden Teil 21 der Rückflußleitung, der mit einer Querbohrung 51 am Ende der Kolbenstange 19 in die Rückflußleitung 17 mündet. In dieser Rückflußleitung ist eine Kombination 24 eines Überströmventils mit einem Rückschlagventil angeordnet, die zusammen mit der Rückflußleitung 18 in die gemeinsame Rückflußleitung 44 mündet und schließlich in den Tank 41 führt. Zusätzlich zu der Rückflußleitung 17 führt eine weitere, zu der ersten Rückflußleitung parallele Rückflußleitung 18 vom Ringraum 50 durch einen Mengenregler 23 und die gemeinsame Rückflußleitung 44 und ein 4/3 Wegeventil 39 in den Tank 41.

Der Arbeitsablauf der Maschine stellt sich wie folgt dar:

Vorbereitend werden die Messer 14, 15 auf den zu bearbeitenden Werkstückdurchmesser eingestellt und die untere Spannbacke 45 wird, ebenfalls in Anpassung an den Werkstückdurchmesser, auf eine zentrische Lage der Stange 8 eingestellt. Schließlich wird die gewünschte Länge der Fase am Anschlag 29 eingestellt. Diese Einstellung erfolgt derart, daß sich der Steuerschieber soweit in den Kolben eindrücken läßt, daß in der eingedrückten Stellung die Messer um das gewünschte Maß 10 der Fase bzw. des Arbeitshubes des Messerkopfes vor der Stirnfläche 28 des Steuerschiebers (11) vorstehen.

./...

0153993

- 8 -

Der Messerkopf läuft permanent um. Zur Aufnahme der Bearbeitung wird auf nicht dargestellte Weise eine Stange 8 in die Spannvorrichtung 7 eingebracht und dort festgespannt. Das 4/3-Wege-Ventil 39 wird in die in den Fig. 1 und 3 gezeigte Stellung gebracht. Der eingeschaltete Motor 40 pumpt Öl in den Ringraum 49. Die dadurch hervorgerufene Bewegung des Kolbens mit der Welle 53 und dem dem Messerkopf 2 verdrängt Öl aus dem Ringraum 50 und baut mit Hilfe des Überströmventils bei 24 im Rückflußsystem einen Mindestdruck auf. Der Mengenregler 23 läßt nur kleine Mengen Öl durchfließen, die hier außer Betracht bleiben können. Der Druck im Ringraum 50 ist gleich dem Druck in den Bohrungen 30 bis 32, 21 und 51 und dem Ringraum 33 . Durch den in den Ringraum 33 hineinragenden Stirnflächenabsatz 26 und den darauf ausgeübten Druck schiebt sich der Steuerschieber in seine vorderste Stellung, auf die Stirnseite der Stange 8 zu.

Mit seiner Stirnfläche 28 trifft der Steuerschieber als erster auf die Stirnfläche 52 der Stange 8. Die axiale Bewegung des Steuerschiebers 11 ist mit seinem Auftreffen auf die Stirnseite der Stange vorerst beendet. Der Kolben mit dem Messerkopf 2 hingegen schiebt sich weiter vor. Solange beide Rückflußleitungen 17 und 18 auf Durchgang stehen, wie in Fig. 1 gezeigt, kann sich der Kolben mit relativ hoher Geschwindigkeit vorbewegen. Diese Möglichkeit besteht, solange der Steuerschieber 11 relativ zum Kolben 5 die in Fig. 1 gezeigte Stellung innehat. Das Öl fließt dabei vom Ringraum 50 durch die Querbohrung 30 über den Einstich 31 in der vorbeschriebenen Weise im wesentlichen über die Rückflußleitung 17 in den Tank 41.

Diese Rückflußleitung 17 wird verschlossen, wenn die Stirnfläche 52 der Stange 8 den Steuerschieber in den Kolben 5 einschiebt und der Einstich 31 den Bereich der Querbohrungen

./...

0153993

---

- 9 -

30, 32 verläßt. Danach fließt Öl nur noch durch den Mengenregler 23, der mit seinem Durchtrittsquerschnitt, der kleiner ist als der des Überströmventils eine wesentlich kleinere Menge Öl durchläßt als das Überströmventil und die Vorschubgeschwindigkeit beim Arbeitshub senkt.

Die Länge des Steuerschiebers 11 zwischen dem Einstich 31 und der Stirnfläche 28 ist so ausgelegt, daß in dem Augenblick, in dem der Einstich 31 den Bereich der Querbohrung 30 verläßt, die Messer auf das Werkstück treffen, d.h. der Arbeitshub beginnt.

Während des Arbeitshubes schieben sich der Kolben 5, der Schlitten 35 und der Messerkopf 2 weiter über den Steuerschieber, bis dieser mit seiner rückwärtigen Stirnfläche 42 auf den Anschlag 29 trifft. Letzterer beendet den Arbeitshub 10 des Messerkopfes, da er ein weiteres Vorschieben des Messerkopfes gegen den sich am Werkstück abstützenden Steuerschieber 11 hindert. Diese Stellung ist in Fig. 3 gezeigt.

Der Messerkopf ist am Ende des Arbeitshubes 10 (Fig. 3). Das 4/3-Wege-Ventil 39 wird umgeschaltet, das Öl fließt zunächst nur über den Mengenregler 23, dann aber auch über die Leitung 17 und die Bohrungen 51 und 30 in den Ringraum 50, bringt den Kolben 5, die Welle 53 und den Messerkopf 2 wieder in die rückwärtige Stellung, drückt den Steuerschieber relativ zum Messerkopf wieder in seine vorderste Stellung und kehrt dabei in die in Fig. 1 gezeigte Stellung zurück.

Damit die Querbohrung 51 ständig außerhalb des Zylinders 6 angeordnet sein kann, muß der Rückflußweg durch den Kolben sich über eine axiale Länge 22 des Kolbens bzw. dessen Kolbenstange 19 erstrecken, die mindestens der maximalen Länge des Leerhubes 9 und des Arbeitshubes 10 entspricht.

./...

- 10 -

Wie die vorstehende Funktionsbeschreibung erkennen läßt, ist die Größe der Fase unabhängig von der genauen Vorpositionierung der Stange 8, da der Arbeitshub 10 erst beginnt, wenn der Steuerschieber 11 auf die Stirnfläche 52 der Stange 8 getroffen ist. Der Leerhub 9 kann, unabhängig von seiner Länge, mit hoher Geschwindigkeit durchfahren werden.

Mit der hier vorgeschlagenen Lösung ist es möglich, den Vorschubweg und die Vorschubgeschwindigkeit in Abhängigkeit von der relativen Anordnung von Messerkopf und Werkstück zu bestimmen.

---

- 11 -

Patentansprüche:

1.) Endenbearbeitungsmaschine (1) für Stangen (8) und Rohre,
    die die folgenden Merkmale aufweist:

    a)   einen drehangetriebenen Messerkopf (2),

    b)   der Messerkopf (2) ist axial in einem Maschinengehäuse (4) der Endenbearbeitungsmaschine (1) in einem
         in Richtung der Rotationsachse des Messerkopfes
         verschieblichen Schlitten (35) gelagert,

    c)   eine Spannvorrichtung (7) für die Werkstücke (8),

    gekennzeichnet durch die folgenden Merkmale:

    d)   der Messerkopf (2) führt einen ersten Teil seines
         Hubes als Leerhub (9) zur Annäherung an das Werkstück (8) mit hoher Geschwindigkeit und anschließend
         einen zweiten Teil als Arbeitshub (10) zur
         Bearbeitung des Werkstücks (8) mit kleiner
         Geschwindigkeit aus,

    e)   zentrisch im Messerkopf (2) im Bereich der Messer (14, 15) ist ein Schalter (11) angeordnet,

    f)   der Schalter (11) schaltet zwischen mindestens zwei
         parallelen Energieversorgungsleitungen (17, 18) zur
         Steuerung des Vorschubs des Schlittens (35) beim
         Leerhub (9) und beim Arbeitshub (10)

../...

Th. Kieserling & Albrecht, GmbH & Co.     Solingen, den 16.02.84

Patentanmeldung                                                Akte K 258

---

- 12 -

2.) Endenbearbeitungsmaschine für Stangen und Rohre, nach
Anspruch 1, gekennzeichnet durch die folgenden Merkmale:

g)     der Schlitten (35) ist mit einem  Kolben (5) eines
Zylinders (6) verbunden,

h)     der Schalter (11) ist als ein in axialer Verschieberichtung (12) des Kolbens (5) in diesem beweglich
geführter Steuerschieber ausgebildet,

i)     der Steuerschieber (11) ragt auf der dem Werkstück (8) zugewandten Stirnseite (13) des
Kolbens (5) aus diesem heraus und in den Bereich der
Messer (14, 15) hinein,

3.) Endenbearbeitungsmaschine für Stangen und Rohre, nach
Anspruch 2, gekennzeichnet durch das folgende Merkmal:

k)     der Steuerschieber schaltet zwischen mindestens zwei
Rückflußleitungen (17,18) zur Steuerung des
Kolbens (5),

4.) Endenbearbeitungsmaschine für Stangen und Rohre, nach den
Ansprüchen 2 und 3, gekennzeichnet durch das folgende
Merkmal:

l)     der Steuerschieber ist als Ventilschieber ausgebildet und ragt in eine (30,32, 33, 21, 51, 17) der
Rückflußleitungen des Kolbens (5),

5.) Endenbearbeitungsmaschine für Stangen und Rohre, nach den
Ansprüchen 2 und 3, gekennzeichnet durch das folgende
Merkmal:

m)     eine erste Rückflußleitung (18) tritt aus dem zum
Kolben (5) gehörigen Zylinder (6) aus und die zweite
(17) tritt aus der Kolbenstange (19) in einem aus
dem Zylinder (6) herausragenden Bereich aus.

./...

- 13 -

6.) Endenbearbeitungsmaschine für Stangen und Rohre, nach
Anspruch 3, gekennzeichnet durch das folgende Merkmal:

n)    die zweite, durch die Kolbenstange führende
Rückflußleitung (30, 32, 33, 21, 51) durchdringt
diese über einen Längenabschnitt (22), der
mindestens dem Maß des Leerhubes (9) des zu
verschiebenden Messerkopfes (2) entspricht,

7.) Endenbearbeitungsmaschine für Stangen und Rohre, nach
Anspruch 3, gekennzeichnet durch das folgende Merkmal:

p)    in der Rückflußleitung (18) für den Fashub (10) ist
ein, vorzugsweise einstellbarer, Mengenregler (23)
eingebaut,

8.) Endenbearbeitungsmaschine für Stangen und Rohre, nach
Anspruch 2, gekennzeichnet durch das folgende Merkmal:

q)    der Steuerschieber weist in seinem, dem Werkstück (8)
abgewandten Längsabschnitt mindestens zwei vom Werkstück weg weisende Stirnflächenabsätze (25, 26) auf,

9.) Endenbearbeitungsmaschine für Stangen und Rohre, nach
Anspruch 2, gekennzeichnet durch das folgende Merkmal:

r)    an der dem Messerkopf (2) abgewandten Seite des
Maschinengehäuses (4) ist eine Steuerbaugruppe (57)
zur Bewegung des Schlittens (35) angeordnet,

10.) Endenbearbeitungsmaschine für Rohre, nach Anspruch 2,
gekennzeichnet durch das folgende Merkmal:

s)    der Steuerschieber weist 2 stirnseitige Anschlagflächen (28, 42) auf, von denen eine (28) der Werkstückstirnfläche (52) zugewandt ist und wobei der anderen
ein entsprechender Anschlag (29) im Kolben (5)
zugeordnet ist.

K 258

0153993

Fig.2

Fig.1

K 258

Fig.3

**0153993**

Nummer der Anmeldung

Europäisches
Patentamt

## EUROPÄISCHER RECHERCHENBERICHT

| | **EINSCHLÄGIGE DOKUMENTE** | | EP 84112791.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| Y | DE - B2 - 2 736 819 (SOMENOR)<br>* Gesamt *<br>-- | 1 | B 23 B 5/16 |
| Y<br>A | US - A - 2 674 138 (MIZE)<br>* Fig. 1-4 *<br>-- | 1<br>2-10 | |
| A | DE - B - 1 200 645 (KIESERLING)<br>* Gesamt *<br>---- | 1 | |
| | | | **RECHERCHIERTE SACHGEBIETE (Int. Cl.4)** |
| | | | B 23 B 5/00<br>B 23 C 3/00 |
| | Der vorliegende Recherchenbericht wurde für alle Patentansprüche erstellt. | | |

| Recherchenort | Abschlußdatum der Recherche | Prüfer |
|---|---|---|
| WIEN | 14-05-1985 | FUCHS |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

  & : Mitglied der gleichen Patentfamilie, übereinstimmendes Dokument

EPA Form 1503. 03.82